# EUROPÄISCHE PATENTANMELDUNG

(11) **EP 1 655 974 A1**
(43) Veröffentlichungstag der Anmeldung: **10.05.2006**
(21) Anmeldenummer: 04026479.8
(22) Anmeldetag: 08.11.2004
(51) Int. Cl.: H04Q 3/00, H04L 12/24

(54) **Verfahren und Vorrichtungen zum Informationsabgleich zwischen Manager und Agent in eiem Managementnetz**

(71) Anmelder: SIEMENS AKTIENGESELLSCHAFT, 80333 München (DE)
(72) Erfinder: Hirsch, Lucian, 81373 München (DE)

(57) **Zusammenfassung**

Die Erfindung betrifft ein Verfahren zum Betreiben eines einen Manager (NMC1, NMC2) und einen Agenten (OMC1) umfassenden Managementnetzes eines Telekommunikationsnetzes, bei dem der Manager (NMC1, NMC2) und der Agent (OMC1) unter Verwendung eines Objektmodells miteinander kommunizieren. Gemäß dem Objektmodell sind Objekte (MOIᵢ, MOIⱼ, MOIₖ, MOIₘ) Objektklassen (MOCi, MOCⱼ, MOCₖ, MOCₘ) zugeordnet. Der Manager (NMC1, NMC2) sendet an den Agenten (OMC1) eine Anfrage (getConfiguration-Changes Request) nach einem Informationsabgleich. Erfindungsgemäß empfängt der Manager (NMC1, NMC2) auf die Anfrage (get-ConfigurationChanges Request) hin Informationen von dem Agenten (OMC1) ausschließlich über Objekte (MOIᵢ, MOIⱼ, MOIₖ, MOIₘ) und/oder Alarme, bezüglich derer seit einem bestimmten Zeitpunkt (t0, t1, t6) eine Änderung erfolgte. Weiterhin betrifft die Erfindung Vorrichtungen zur Durchführung des Verfahrens.

## Beschreibung

Verfahren und Vorrichtungen zum Informationsabgleich zwischen Manager und Agent in einem Managementnetz

Die Erfindung betrifft ein Verfahren zum Betreiben eines Managementnetzes eines Telekommunikationsnetzes, bei dem der Manager und der Agent unter Verwendung eines Objektmodells miteinander kommunizieren.

Gemäß den Prinzipien eines Managementnetzes, auch als TMN-Prinzipien (TMN: Telecommunications Management Network) bezeichnet, existieren mehrere Managementschichten für das Management eines Kommunikationssystems - wie beispielsweise eines Mobilfunkkommunikationssystems -, wobei jede Schicht mit Ausnahme der obersten und untersten Schicht eine doppelte Funktion, nämlich eine Manager- und eine Agentenfunktion besitzt. Im managenden System ("managing system") übt jede Ebene außer der untersten eine Manager-Funktion für die darunterliegende Ebene aus. Im gemanagten System ("managed system") kommt jeder Ebene außer der obersten eine AgentenFunktion für die nächsthöhere Schicht zu.

Manager starten zur Netzüberwachung und -kontrolle Operationen, indem sie sogenannte "requests" versenden, die von Agenten ausgeführt werden, und erhalten entsprechende Rückmeldungen, sogenannte "responses", von den Agenten. Elemente des Telekommunikationsnetzes, auch als Ressourcen des Telekommunikationsnetzes bezeichnet, die in einer TMN-Hierarchie die Rolle eines Agenten ausüben, erkennen relevante Ereignisse, sogenannte "events", wie z.B. Alarme, generieren entsprechende Mitteilungen, sogenannte "notifications", und übertragen sie in Form von Ereignismeldungen, sogenannten "event reports", an Manager, um ein effizientes Netzmanagement zu ermöglichen.

Das Netzwerkmanagement kann unter anderem das Fehlermanagement (Fault-Management) und/oder das Konfigurationsmanagement (Configuration Management) und/oder das Sicherheitsmanagement (Security-Management) und/oder das des Abrechnungsmanagement (Accounting-Management) und/oder das Leistungsmanagement (Performance-Management) umfassen. Durch das Netzwerkmanagement sollen geeignete Mechanismen zur Informationsverteilung und -verwaltung bereitgestellt werden, so dass bei Bedarf ein umfassendes Bild über den Netzzustand zur Verfügung steht und die einzelnen Objekte des Telekommunikationsnetzes effizient überwacht und konfiguriert werden können.

Die Manager-Agent-Kommunikation erfolgt über sogenannte Management-Schnittstellen bzw. Manager-Agent-Schnittstellen, die in einer objekt-orientierten Umgebung durch ein Kommunikationsprotokoll, wie z.B. CMIP (Common Management Information Protocol) nach ITU-T X.711 oder CORBA (Common Object Request Broker Architecture), und durch ein Objektmodell gekennzeichnet sind. Objektmodelle dienen der Modellierung von Ressourcen des Telekommunikationsnetzes, wobei diese Ressourcen bei der Modellierung in Objektklassen eingeteilt werden.

Solche Schnittstellen gibt es beispielsweise zwischen einerseits der Netzwerkelementmanagement-Ebene (Network Element Management Level) und andererseits der Netzwerkelement-Ebene (Network Element Level). Ein Beispiel für Netzeinrichtungen dieser Manager-Agent-Schnittstelle stellen die Betriebs- und Wartungszentren (OMC: Operation and Maintenance Center) auf der Seite der Netzwerkelementmanagement-Ebene dar, sowie auf der Seite der Netzwerkelement-Ebene Einrichtungen wie z.B. Basisstationen des Basisstationssystems (BSS: Base Station System) eines GSM Mobilfunknetzes, oder Basisstationen anderer Kommunikationsnetze, beispielsweise NodeB's eines UMTS Mobilfunknetzes (UMTS: Universal Mobile Telecommunication System), oder Funkzugangspunkte eines WLAN-Systems (WLAN: Wireless Local Area Network) beispielsweise gemäß einem der IEEE 802.11-Standards.

Management-Schnittstellen bzw. Manager-Agent-Schnittstellen existieren auch zwischen einerseits der Netzwerkmanagement-Ebene (Network Management Level) und andererseits der Netzwerkelementmanagement-Ebene. Ein Beispiel für Netzeinrichtungen zu dieser Manager-Agent-Schnittstelle stellen die Netzwerkmanagementzentren (NMC: Network Management Center) auf der Seite der Netzwerkmanagement-Ebene und die Betriebs- und Wartungszentren (OMC: Operation and Maintenance Center) auf der Seite der Netzwerkelementmanagement-Ebene z.B. im genannten GSM oder einem anderen Mobilfunk- oder Telekommunikationsnetz dar.

Der Erfindung liegt die Aufgabe zugrunde, ein effizientes Verfahren zum Betreiben eines Managementnetzes der eingangs genannten Art aufzuzeigen. Weiterhin sollen ein geeigneter Manager, ein ebensolcher Agent und ein Managementnetz zur Durchführung des Verfahrens vorgestellt werden.

Diese Aufgabe wird durch ein Verfahren mit den Merkmalen der Patentansprüche 1, 2 und 3, sowie durch einen Manager, einen Agenten und ein Managementnetz mit Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren zum Betreiben eines einen Manager und einen Agenten umfassenden Managementnetzes eines Telekommunikationsnetzes kommunizieren der Manager und der Agent unter Verwendung eines Objektmodells miteinander. Gemäß dem Objektmodell sind Objekte Objektklassen zugeordnet. Der Manager sendet an den Agenten eine Anfrage nach einem Informationsabgleich bzw. der Agent empfängt von dem Manager eine Anfrage nach einem Informationsabgleich. Erfindungsgemäß empfängt der Manager auf die Anfrage hin Informationen von dem Agenten ausschließlich über Objekte und/oder Alarme, bezüglich derer seit einem bestimmten Zeitpunkt eine Änderung erfolgte bzw. der Agent sendet diese Informationen an den Manager.

Der Manager und der Agent kommunizieren miteinander unter Verwendung eines Objektmodells. Bei den Objekten, welche den Objektklassen des Objektmodells zugeordnet werden, handelt es sich um Abstraktionen von physischen oder logischen Bestandteilen, d.h. Netzressourcen, des gemanagten Telekommunikationsnetzes, die Netzressourcen werden somit als Objekte modelliert. In Bezug auf ein Objekt sind verschiedenartige Änderungen möglich, abhängig von der konkreten Ausgestaltung des Objektes und seiner Zuordnung zu einer Objektklasse.

Ein Alarm existiert aufgrund eines Ereignisses (event). Stellt ein Objekt ein solches "alarm event" fest, so sendet es einen "alarm report" zur Benachrichtigung über den Alarm. Der Alarm ist mit demjenigen Objekt verknüpft, welches den "alarm report" gesendet hat. Ein Alarm kann verschiedene Zustände aufweisen, welche sich ändern können. Weiterhin kann ein Alarm Attribute, die so genannte Alarminformation, aufweisen, welche geändert werden können.

Das erfindungsgemäße Verfahren ermöglicht eine Synchronisation von Informationen zwischen einem Manager und einem Agenten. Es handelt sich hierbei nicht um eine vollständige Synchronisation, sondern um eine Teilsynchronisation, da nicht alle Objekte und/oder Alarme Teil der Synchronisation sind, sondern nur diejenigen, welche die Bedingung erfüllen, dass in Bezug auf sie seit einem bestimmten Zeitpunkt eine Änderung erfolgte. Nicht enthalten sind in den Informationen ausschließlich über Objekte und/oder Alarme, bezüglich derer seit einem bestimmten Zeitpunkt eine Änderung erfolgte, somit Informationen über Objekte und/oder Alarme, bezüglich derer seit dem bestimmten Zeitpunkt keine Änderung erfolgte. Mit Ausnahme dieser Informationen über Objekte und/oder Alarme, welche seit dem bestimmten Zeitpunkt unverändert sind, können auch andere Informationen als die Informationen ausschließlich über Objekte und/oder Alarme, bezüglich derer seit einem bestimmten Zeitpunkt eine Änderung erfolgte, auf die Anfrage hin von dem Agent an den Manager gesendet werden.

Die Informationen über Objekte und/oder Alarme, bezüglich derer seit dem bestimmten Zeitpunkt eine Änderung erfolgte, sind vorzugsweise in einer Nachricht enthalten, es ist jedoch auch möglich, sie auf mehrere Nachrichten aufzuteilen. Außer dem Manager und dem Agent können weitere Einrichtungen Bestandteil des Managementnetzes sein. Es ist möglich, dass das erfindungsgemäße Verfahren von einem Agenten in Bezug auf mehrere Manager durchgeführt wird, und auch von einem Manager in Bezug auf mehrere Agenten.

In Weiterbildung der Erfindung handelt es sich bei dem bestimmten Zeitpunkt um den Zeitpunkt des letzten von dem Manager angeforderten Informationsabgleichs zwischen dem Manager und dem Agent. Somit wird der Manager bei dem erfindungsgemäßen Verfahren über Änderungen informiert, welche seit der letzten von ihm angeforderten Synchronisation aufgetreten sind. Bei dieser letzten Synchronisation kann es sich um eine vollständige Synchronisation handeln, oder um eine Teilsynchronisation gemäß der vorliegenden Erfindung. Alternativ zum Zeitpunkt der letzten Synchronisation kann auch der Zeitpunkt eines anderen Ereignisses verwendet werden, so z.B. der Zeitpunkt, zu welchem die Verbindung zwischen dem Manager und dem Agent abgebrochen ist.

Einer Ausgestaltung der Erfindung gemäß enthält die Anfrage des Managers Informationen über Objekte, auf welche sich die Informationen des Agenten über Objekte und/oder Alarme, bezüglich derer seit dem bestimmten Zeitpunkt eine Änderung erfolgte, beziehen sollen. Somit müssen nicht alle Objekte und/oder Alarme von dem Agenten auf Änderungen überprüft werden, sondern nur diejenigen, welche in der Anforderung des Managers indiziert sind. In Bezug auf Alarme kann die Anfrage des Managers anzeigen, dass die veränderten Alarme nur bestimmte Objekte betreffen sollen.

Besonders vorteilhaft ist es, wenn die Informationen über Objekte, bezüglich derer seit dem bestimmten Zeitpunkt eine Änderung erfolgte, Informationen umfassen über eine seit dem bestimmten Zeitpunkt erfolgte Änderung hinsichtlich mindestens eines Attributes von mindestens einem dem Manager bekannten Objekt. Dass dem Manager ein Objekt bekannt ist, kann z.B. bedeuten, dass der Manager Informationen über dieses Objekt gespeichert hat, wie z.B. Identifikationsinformationen des Objektes, die Objektklasse des Objektes, die Attribute und die Werte der Attribute des Objektes, und/oder dass der Manager bereits Nachrichten über dieses Objekt von dem Agenten empfangen oder an den Agenten versendet hat. Eine Änderung eines Attributes kann z.B. realisiert werden durch die Änderung des Wertes des Attributes, durch das Hinzufügen des Attributes oder das Löschen des Attributes. Vorzugsweise wird der Manager im Rahmen der erfindungsgemäßen TeilSynchronisation über alle seit dem bestimmten Zeitpunkt geänderten Attribute aller ihm bekannten Objekte, gegebenenfalls welche in der Anfrage spezifiziert sind, informiert. Die Informationen über die Änderung eines Attributes eines Objektes umfassen vorzugsweise: Identifikationsinformation des jeweiligen Objektes, Identifikationsinformation des Attributes und den aktuellen Attributwert.

Zusätzlich oder alternativ ist es vorteilhaft, wenn die Informationen über Objekte, bezüglich derer seit dem bestimmten Zeitpunkt eine Änderung erfolgte, Informationen umfassen über zumindest ein dem Manager unbekanntes Objekt, welches nach dem bestimmten Zeitpunkt für den Manager relevant geworden ist. Dass dem Manager ein Objekt unbekannt ist, kann z.B. bedeuten, dass der Manager keine Informationen über dieses Objekt gespeichert hat, und/oder dass der Manager noch keine Nachrichten über dieses Objekt von dem Agenten empfangen oder an den Agenten versendet hat. Ein Objekt kann dann für einen Manager relevant werden, wenn es zu der Menge der von dem Manager überwachten Objekte hinzugefügt wird, so beispielsweise wenn eine Einrichtung neu installiert wird, welche von dem Manager überwacht werden soll, wenn eine Einrichtung, welche dem Manager bereits als Objekt bekannt war als ein anderes Objekt erfasst werden soll, wenn ein Objekt, welches zeitweise nicht von dem Manager überwacht wurde, z.B. wegen Instandsetzung vor Ort, wieder von dem Manager überwacht werden soll. Die Informationen über ein dem Manager bisher unbekanntes Objekt umfassen vorzugsweise: Identifikationsinformation des Objektes, Identifikationsinformation der Attribute des Objektes und die aktuellen Attributwerte.

Zusätzlich oder alternativ ist es vorteilhaft, wenn die Informationen über Objekte, bezüglich derer seit dem bestimmten Zeitpunkt eine Änderung erfolgte, Informationen umfassen über zumindest ein dem Manager bekanntes Objekt, welches nach dem bestimmten Zeitpunkt für den Manager irrelevant geworden ist. Ein Objekt kann dann für einen Manager irrelevant werden, wenn es aus der Menge der von dem Manager überwachten Objekte entfernt wird, so beispielsweise wenn eine Einrichtung aus dem Telekommunikationsnetz entfernt wird, wenn eine Einrichtung, welche zuvor von dem Manager überwacht wurde, von einem anderen Manager überwacht werden soll, wenn eine Einrichtung, welche dem Manager bereits als Objekt bekannt war als ein anderes Objekt erfasst werden soll, wenn ein Objekt zeitweise nicht von dem Manager überwacht werden soll, z.B. wegen Instandsetzung vor Ort.

In Weiterbildung der Erfindung umfassen die Informationen über Alarme, bezüglich derer seit dem bestimmten Zeitpunkt eine Änderung erfolgte, Informationen über zumindest einen nach dem bestimmten Zeitpunkt von dem Agenten empfangenen und/oder generierten Alarm. Dies kann z.B. Alarme betreffen, welche von einem dem Agenten untergeordneten Agenten, welcher ein von dem Manager überwachtes Objekt darstellt, generiert wurden und gegebenenfalls von dem Agenten an den Manager weitergeleitet wurden. Weiterhin kann dies auch Alarme betreffen, welche von dem Agent generiert wurden.

Vorteilhaft ist es, wenn die Informationen über Alarme, bezüglich derer seit dem bestimmten Zeitpunkt eine Änderung erfolgte, Informationen umfassen über eine seit dem bestimmten Zeitpunkt erfolgte Änderung hinsichtlich mindestens einen Zustandes von mindestens einem Alarm. Bei Zuständen von Alarmen kann es sich z.B. um Zustände wie "active" und "unacknowledged", d.h. die Alarmursache ist noch vorhanden und der Alarm wurde noch nicht bestätigt, "active" und "acknowledged", d.h. die Alarmursache ist noch vorhanden und der Alarm wurde bestätigt, "clear" und "unacknowledged", d.h. die Alarmursache wurde behoben, aber der Alarm wurde noch nicht bestätigt, "clear" und "acknowleged", d.h. die Alarmursache wurde behoben, und der Alarm wurde bestätigt, handeln. Im letzten Fall kann der Alarm aus der Alarmliste gestrichen werden.

In Ausgestaltung der Erfindung wird die Anfrage durch den Manager periodisch und/oder nach einer Wiederherstellung der Kommunikation zwischen dem Manager und dem Agent gesendet. Ist beispielsweise die Kommunikation zwischen dem Manager und dem Agent zeitweise unterbrochen, kann der Manager, wenn er feststellt, dass die Störung der Kommunikation beendet ist, eine Anfrage zum Informationsabgleich an den Agenten senden. Diese Anfrage kann auch einer üblicherweise periodisch stattfindenden Abfolge von Anfragen überlagert werden. Es ist jedoch auch möglich, dass der Manager die Anfrage zu einem beliebigen Zeitpunkt sendet.

Der erfindungsgemäße Manager für ein Telekommunikationsnetz weist auf:
Mittel zum Kommunizieren mit einem Agenten unter Verwendung eines Objektmodells, gemäß welchem Objekte Objektklassen zugeordnet sind,
Mittel zum Senden einer Anfrage nach einem Informationsabgleich an den Agenten,
Mittel zum Empfangen auf die Anfrage hin von Informationen von dem Agenten ausschließlich über Objekte und/oder Alarme, bezüglich derer seit einem bestimmten Zeitpunkt eine Änderung erfolgte.

Der erfindungsgemäße Agent für ein Telekommunikationsnetz weist auf:
Mittel zum Kommunizieren mit einem Manager unter Verwendung eines Objektmodells, gemäß welchem Objekte Objektklassen zugeordnet sind,
Mittel zum Empfangen einer Anfrage nach einem Informationsabgleich von dem Manager,
Mittel zum Senden auf die Anfrage hin von Informationen an den Manager ausschließlich über Objekte und/oder Alarme, bezüglich derer seit einem bestimmten Zeitpunkt eine Änderung erfolgte.

Das erfindungsgemäße Managementnetz kann außer dem erfindungsgemäßen Manager und dem erfindungsgemäßen Agenten weitere Einrichtungen umfassen.

Sowohl der erfindungsgemäße Manager als auch der erfindungsgemäße Agent eignen sich insbesondere zur Durchführung des erfindungsgemäßen Verfahrens, wobei dies auch auf die Ausgestaltungen und Weiterbildungen zutreffen kann. Hierzu können sie weitere geeignete Mittel aufweisen.

Im folgenden wird die Erfindung anhand eines Ausführungsbeispiels näher erläutert. Dabei zeigen:
- Figur 1:: einen Ausschnitt aus einem Managementnetz eines Mobilfunkkommunikationssystems,
- Figur 2:: ein Ablaufschema des erfindungsgemäßen Verfahrens.

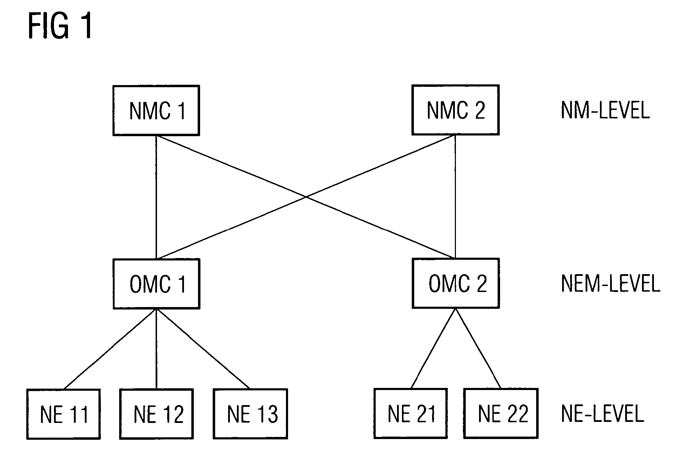

Der in Figur 1 dargestellte Ausschnitt aus einem Managementnetz eines Mobilfunkkommunikationssystems besteht aus den drei Ebenen NM-LEVEL (NM: Network Manager), NEM-LEVEL (NEM: Network Element Manager) und NE-LEVEL (NE: Network Element). Bestandteil der höchsten Ebene NM-LEVEL sind die Netzwerkmanagementzentren NMC1 und NMC2, welche mit den beiden Betriebs- und Wartungszentren OMC1 und OMC2 der mittleren Ebene NEM-LEVEL verbunden sind. Die beiden Betriebs- und Wartungszentren OMC1 und OMC2 fungieren den Netzwerkmanagementzentren NMC1 und NMC2 gegenüber als Agenten. Das Betriebs- und Wartungszentrum OMC1 ist mit den drei Netzelementen NE11, NE12 und NE13 der untersten Ebene NE-LEVEL verbunden, während das Betriebs- und Wartungszentrum OMC2 mit den zwei Netzelementen NE21 und NE22 verbunden ist. Bei den Netzelementen NE11, NE12, NE13, NE21 und NE22 kann es sich z.B. um Basisstationen oder Einrichtungen zur Kontrolle von Basisstationen handeln.

Die Netzressourcen des Mobilfunkkommunikationssystems, wie z.B. die Netzelemente NE11, NE12, NE13, NE21 und NE22, werden im Rahmen des Netzwerkmanagements in Objektklassen eingeteilt. Von 3GPP wurde für die Kommunikation über die Schnittstelle zwischen einem Netzwerkmanagementzentrum und einem Betriebs- und Wartungszentrum ein Objektmodell definiert, welches z.B. die Objektklasse ManagedElement und ManagedFunction umfasst, bei denen es sich um Basisobjektklassen mit allgemeinen Attributen handelt. Weitere Objektklassen sind z.B. gsmCell, utranCell, btsSiteManager, bssFunction, mscServer-Function, rncFunction, hlrfunction, vlrfunction, sgsnFunction und ggsnFunction.

Jede Objektklasse ist definiert über bestimmte Operationen, d.h. über Kommandos, welche an Objekten dieser Objektklasse von einem Manager gesendet werden können, sowie über bestimmte Attribute, d.h. Eigenschaften, welche von einem Manager abgefragt und gegebenenfalls bearbeitet werden können, und über bestimmte Nachrichten, welche von Objekten der jeweiligen Objektklasse im Rahmen des Netzwerkmanagements versendet werden können, sowie über die Beschreibung der Bedeutung und des Verhaltes der Objektklasse und ihrer Bestandteile. Das verwendete Objektmodell bzw. die definierten Objektklassen zwischen Netzwerkmanagementzentren einerseits und Betriebs- und Wartungszentren andererseits sind in der Regel generisch, um Betriebs- und Wartungszentren verschiedener Hersteller integrieren zu können. Dies liegt darin begründet, dass ein Teil der Manageraufgaben, welche die Betriebs- und Wartungszentren gegenüber den ihnen untergeordneten Netzelementen ausüben, so wie z.B. das Konfigurationsmanagement, abhängig von der konkreten hardware- und software- Ausgestaltung der Netzelemente und somit herstellerabhängig sind. Da ein Netzwerkmanagementzentrum oftmals mit einer Mehrzahl an Betriebs- und Wartungszentren verschiedener Hersteller verbunden ist, erfolgt in den Betriebs- und Wartungszentren eine Umwandlung von Nachrichten des hardwarebezogenen Objektmodells der OMC-NE-Schnittstelle in Nachrichten des generischen Objektmodells der OMC-NMC-Schnittstelle.

Jeder Manager überwacht eine oder mehrere Netzressourcen, an welche er Operationen, d.h. Anforderungen, versenden kann und von welchen er Notifications empfängt. Hierzu weist er eine Datenbank auf, in welcher die für ihn relevanten, d.h. von ihm überwachten, Netzressourcen eingetragen sind. Für jede von dem Manager überwachte Netzressource wird hierzu eine Objektinstanz, im folgenden als Objekt bezeichnet, erzeugt. Wird beispielsweise eine neue Basisstation installiert, wird ein neues dieser Basisstation entsprechendes Objekt erzeugt und, welches der üblichen Objektklasse der Basisstationen zugeordnet ist. Das neue Objekt wird in die Datenbank des Managers eingetragen. Auf analoge Weise können auch Objekte gelöscht werden.

Das optimale Management eines Telekommunikationsnetzes setzt voraus, dass nur die relevanten Ereignismeldungen aus den untergeordneten Agenten möglichst schnell an die Manager weitergeleitet werden. Unter Normalbedingungen, d. h. wenn die Kommunikation zwischen Agent und Manager ordnungsgemäß funktioniert, kann dies über einen im Agent vorhandenen Filtermechanismus (beispielsweise bei einer CMIP-basierten Management-Schnittstelle mit Hilfe von Event Forwarding Discriminatoren, so genannten EFDs, gemäß ITU-T X.734 "Systems Management: Event Report Management Function" oder in einer CORBAbasierten Management-Schnittstelle mit Hilfe von Notification channels) erfolgen.

Um ein aktuelles Abbild des Netzzustands zu erhalten, kann ein Manager die von ihm gespeicherten Management-Informationen mit Agenten synchronisieren. Für diesen Zweck werden Synchronisationsprozeduren zum Informationsabgleich (auch "Alignment"-Prozeduren genannt) z.B. für Konfigurationsdaten oder Alarme verwendet. Die Konfigurationsdaten eines Objektes stellen die Mange aller Attribute und deren Werte dar, d.h. die Gesamtheit der Eigenschaften des Objektes.

Derartige Synchronisationsvorgänge sind in verschiedenen Fällen erforderlich, so z.B.:
a) Nach Unterbrechung und anschließender Wiederherstellung der Kommunikation zwischen Manager und Agent.
b) Wenn bestimmte Agenten, so genannte einfache Agenten, konfigurationsbezogene Notifications (notifyObjectCreation / notifiyObjectDeletion / notifyAttributeValueChange, wie beispielsweise im 3GPP Standard TS 32.662 "Configuration Management (CM); Kernel CM Information Service (IS), V6.3.0" definiert) nicht generieren oder wenn Manager solche konfigurationsbezogene Notifications nicht auswerten, weil eine "real-time" Synchronisierung zu aufwendig ist. In diesem Fall muss eine Synchronisation zumindest periodisch von Managern gestartet werden.
c) Wenn aus anderen Systemgründen konfigurationsbezogene Notifications oder auch Alarme verloren gehen können, d.h. wenn eine ereignisorientierte Synchronisation erforderlich ist, obwohl die Manager-Agent Kommunikation nicht unterbrochen wurde.

Solche Prozeduren werden üblicherweise standardisiert, um Synchronisationen zwischen Managern und Agenten verschiedener Hersteller zu ermöglichen. Beispielsweise definiert der 3GPP-Standard TS 32.602 [Configuration Management (CM) ;Basic CM Integration Reference Point (IRP): Information Service (IS), V6.0.0] eine Operation getMoAttributes, mit der ein Manager die vom Agenten verwalteten Konfigurationsdaten anfordern kann. Für die Synchronisation von Alarmen definiert der 3GPP-Standard TS 32.111-2 [Fault Management; Part 2: Alarm Integration Reference Point (IRP): Information Service (IS)] eine Operation getAlarmList. Diese Operationen erlauben einem Manager, die gesamte Management-Information zu synchronisieren, d.h. einen vollständigen Informationsabgleich mit dem Agenten durchzuführen. Bezieht sich der Informationsabgleich auf Konfigurationsdaten, so empfängt der Manager gemäß dem Stand der Technik die aktuellen Werte aller Attribute aller Objekte, welche von ihm überwacht werden, zusammen mit einer Identifikationsinformation des jeweiligen Objekts (MOI, Managed Object Instance) und einer Identifikationsinformation der Objektklasse des jeweiligen Objektes (MOC, Managed Object Class). Bezieht sich der Informationsabgleich auf Alarme, so empfängt der Manager gemäß dem Stand der Technik alle für ihn relevanten Alarme. Dieser vollständige Informationsabgleich ist auch bezogen auf eine bestimmte Netzregion möglich. Der Manager empfängt die Informationen unabhängig davon, ob ihm diese Management-Informationen bereits bekannt sind. Da ein Manager nicht wissen kann, welche einzelne Daten in der Zwischenzeit tatsächlich verändert wurden, muss eine Gesamtsynchronisation gestartet werden. Die Konsequenz aus der beschriebenen vollständigen Synchronisation ist eine sehr lange, in den allermeisten Fällen unnötige Synchronisationsdauer, die für viele Operatoren, vor allem nach relativ kurzen Unterbrechungen der Manager-Agent Kommunikation, inakzeptabel ist. Dies ist, angesichts der riesigen Menge von zu synchronisierenden Daten, vor allem an den NM-EM Schnittstellen von spezieller Bedeutung, denn fällt ein Netzwerkmanagementzentrum zeitweilig aus oder wertet es keine konfigurationsbezogene Notifications aus, muss es mit allen Betriebs- und Wartungszentren synchronisiert werden.

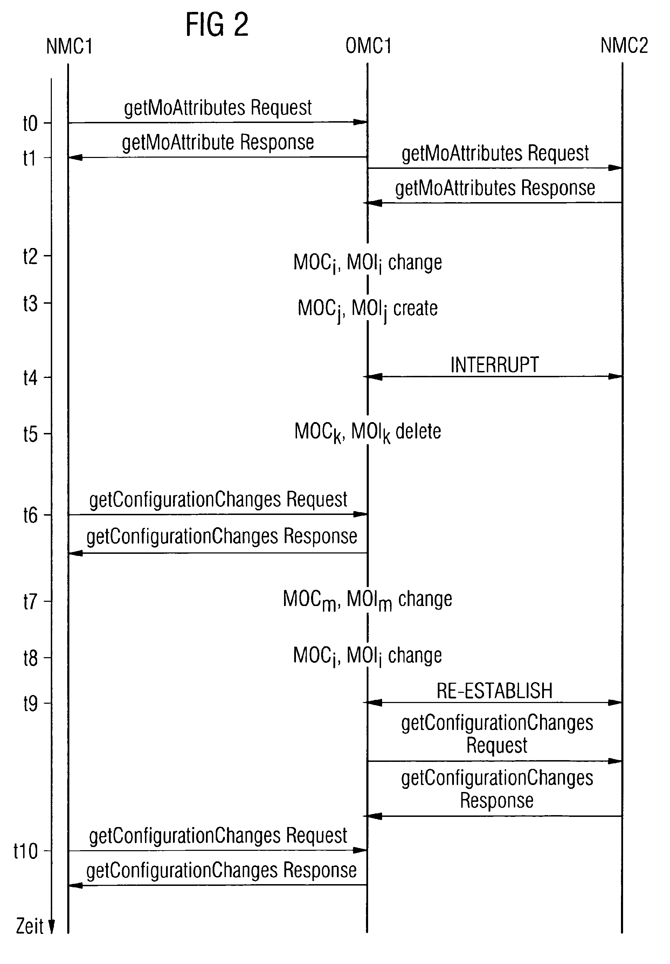

Das erfindungsgemäße Verfahren wird im Folgenden anhand von Figur 2 beispielhaft für die NM-EM Management-Schnittstelle zwischen dem Betriebs- und Wartungszentrum OMC1 und den Netzwerkmanagementzentren NMC1 und NMC2 im Bezug auf die Synchronisation von Konfigurationsdaten beschrieben. Das Betriebs- und Wartungszentrum OMC1 verwaltet für jedes der beiden Netzwerkmanagementzentren NMC1 und NMC2 eine dynamische Liste, im folgenden als Änderungsliste bezeichnet, der Konfigurationsänderungen, in welche Identifikationsinformationen in Form des vollständigen Namens (DN = Distinguished Name) aller seit der letzten Synchronisation geänderten Objekte eingetragen werden:
a) Für ein Objekt, welches geändert ist, da es neu ist, d.h. ein Objekt, welches bislang weder in der von dem Manager noch in der von dem Agent gespeicherten Datenbank der von dem Manager überwachten Objekte enthalten war, und in die Datenbank des Agenten aufgenommen wurde und in die Datenbank des Managers aufzunehmen ist, wird ein Listeneintrag in der Änderungsliste erstellt mit der Identifikationsinformation des Objektes und der Kennung "N" (New).
b) Für ein geändertes Objekt, d.h. ein Objekt, welches bereits in der von dem Manager und in der von dem Agent gespeicherten Datenbank der von dem Manager überwachten Objekte enthalten ist, wird ein Listeneintrag in der Änderungsliste erstellt mit der Identifikationsinformation des Objektes und der Kennung "M" (Modified). Eine Änderung kann darin bestehen, dass ein Wert eines Attributes oder mehrerer Attribute des Objektes geändert wurde, z.B. durch Modifikation von einem lokalen Operator, oder dass ein Attributwert hinzugefügt oder entfernt wurde.
c) Für ein Objekt, welches geändert ist, da es gelöscht wurde, d.h. ein Objekt, welches bislang in der von dem Manager und in der von dem Agent gespeicherten Datenbank der von dem Manager überwachten Objekte enthalten war, und aus der Datenbank des Agenten gelöscht wurde und aus der Datenbank des Managers zu löschen ist, wird ein Listeneintrag in der Änderungsliste erstellt mit der Identifikationsinformation des Objektes und der Kennung "D" (Deleted).

Beim ersten Aufbau der Manager-Agent Kommunikation sendet das jeweilige Netzwerkmanagementzentren NMC1 oder NMC2 eine Aufforderung zur Durchführung einer vollständigen Synchronisation an das Betriebs- und Wartungszentrum OMC1. So sendet in Figur 2, in welcher der Ablauf der Zeit nach unten aufgetragen ist, das Netzwerkmanagementzentrum NMC1 zum Zeitpunkt t0 eine gemäß 3GPP TS 32.602 standardisierte Anforderung getMoAttributes Request an das Betriebs- und Wartungszentrum OMC1, und das Netzwerkmanagementzentrum NMC2 sendet eine solche Operation zum Zeitpunkt t1. Das Betriebs- und Wartungszentrum OMC1 antwortet jeweils mit der gemäß 3GPP TS 32.602 standardisierten Nachricht getMoAttributes Response, welche wie oben erläutert alle von dem jeweiligen Manager überwachten Objekte und die Werte ihrer Attribute enthalten. Nach Ausführung dieser vollständigen Synchronisation wird die Änderungsliste des Betriebs- und Wartungszentrums OMC1 für den jeweiligen Manager initialisiert, so dass für das jeweilige Netzwerkmanagementzentrum NMC1 bzw. NMC2 nach Versendung der Nachricht getMoAttributes Response eine leere Änderungsliste vorliegt.

Nach einer Unterbrechung und Wiederherstellung der Manager-Agent Kommunikation beispielsweise oder wenn ein Manager erkennt, dass seine Konfigurationsdaten nicht mehr aktuell sein könnten, benötigt er nur die seit dem letzten Synchronisationsvorgang aufgetretenen Änderungen der Konfigurationsdaten, um die eigene Datenbank wieder aktualisieren zu können. Gemäß der Erfindung wird ein Verfahren durchgeführt, über welches der Manager die seit der letzten Synchronisation aufgetretenen Änderungen in Erfahrung bringt, ohne dass überflüssigerweise Informationen von dem Agent übermittelt werden, welche sich seit der letzten Synchronisation nicht geändert haben. Diese Synchronisation wird aufgrund der Mitteilung, welche auf die Veränderungen beschränkt ist, im folgenden als Delta-Synchronisation bezeichnet. Um eine Delta-Synchronisation anzustoßen, sendet das Netzwerkmanagementzentrum NMC1 oder NMC2 eine Nachricht getConfigurationChanges Request mit folgenden Parametern an das Betriebs- und Wartungszentrums OMC1:
- managerReference: dieser Parameter identifiziert eindeutig das jeweilige Netzwerkmanagementzentrum NMC1 oder NMC2;
- baseObjectInstance: dieser optionale Parameter identifiziert ein Objekt als Startpunkt im Objektbaum für die Auswahl der geänderten Objekte. Alle im Objektbaum unter diesem Referenzobjekt enthaltenen Objekte werden gemäß dem Wert des folgenden Parameters scope untersucht;
- scope: dieser optionale Parameter spezifiziert, ausgehend von dem oben genannten Referenzobjekt, für welche im Objektbaum der Manager-Agent Schnittstelle untergeordneten Objekte die geänderten Konfigurationsdaten synchronisiert werden sollen. Der Parameter kann die gleichen Werte wie bei der standardisierten Operation getMoAttributes annehmen: BASE OBJECT ONLY, Nth LEVEL SUBORDINATES, BASE Nth LEVEL, BASE ALL.

Durch die Parameter baseObjectInstance und scope kann der Manager somit die Objekte, an welchen er im Rahmen der Delta-Synchronisierung interessiert ist, einschränken. Insbesondere kann der Manager als baseObjectInstance die oberste Instanz im Objektbaum und als scope den Wert BASE ALL verwenden, d.h. alle geänderten Objekte sollen bei dieser Delta-Synchronisation berücksichtigt werden. Diese Auswahl wird von dem Agenten angenommen, wenn in der Anforderungsnachricht getConfigurationChanges Request die optionalen Parameter baseObjectInstance und scope nicht verwendet werden.

Das Betriebs- und Wartungszentrums OMC1 sucht in der dem jeweiligen Netzwerkmanagementzentrum NMC1 oder NMC2 zugeordneten Änderungsliste nach den Objekten gemäß den Parametern baseObjectInstance und scope. Nach Ende des Suchvorgangs sendet das Betriebs- und Wartungszentrums OMC1 eine Antwort getConfigurationChanges Response an den jeweiligen Manager mit dem folgenden Inhalt:
- newObjectsList: dies entspricht einer Liste mit den seit der letzten Synchronisation neu erzeugten Objekten, entsprechend der Kennung "N" in der Änderungsliste, wobei für jedes Objekt die aktuelle Objektklasse, der Objektname in Form des "distinguished name" und die Attributliste, d.h. für jedes Attribut der Name des Attributes und der Wert des Attributes, enthalten sind.
- changedObjectsList: dies entspricht einer Liste mit den seit der letzten Synchronisation veränderten Objekten, entsprechend der Kennung "M" in der Änderungsliste. Auch hier werden für jedes Objekt die aktuelle Objektklasse, der Objektname und die Attributliste angegeben.
- deletedObjectsList: dies entspricht einer Liste mit den seit der letzten Synchronisation gelöschten Objekten, entsprechend der Kennung "D" in der Änderungsliste. Für jedes Objekt werden nur die Objektklasse und der Objektname angegeben.

Nach der Versendung der Nachricht getConfigurationChanges Response wird die dem jeweiligen Netzwerkmanagementzentrum NMC1 bzw. NMC2 zugeordnete Änderungsliste von dem Betriebs- und Wartungszentrums OMC1 initialisiert.

In Figur 2 wird beispielhaft der Fall betrachtet, dass das beschriebene Verfahren der Delta-Synchronisation von dem Netzwerkmanagementzentrum NMC1 periodisch angestoßen wird, während die Aufforderung zur Durchführung der Delta-Synchronisation durch das Netzwerkmanagementzentrum NMC2 nach Wiederherstellung der Kommunikation nach einer vorhergehenden Unterbrechung der Manager-Agent Kommunikation erfolgt. Beispielsweise ist es möglich, dass das Netzwerkmanagementzentrum NMC1 keine konfigurationsbezogenen Notifications (wie notifyObjectCreation / notifiyObjectDeletion / notifyAttributeValueChange) auswertet, während das Netzwerkmanagementzentrum NMC2 diese Notifications unterstützt.

Wie bereits oben erläutert, erfolgt zu den Zeitpunkten t0 und t1 eine vollständige Synchronisation zwischen dem Betriebs- und Wartungszentrums OMC1 und dem Netzwerkmanagementzentrum NMC1 bzw. NMC2.

Zum Zeitpunkt t2 werden im Verfahrensschritt "MOCᵢ, MOIi change" eine oder mehrere Attribute eines Objektes, identifiziert durch MOIᵢ (MOI: managed object instance) der Objektklasse MOCi (MOC: managed object class), vom OMC-Operator oder durch eine automatische Rekonfiguration verändert. Das Betriebs- und Wartungszentrums OMC1 trägt die Identifikationsinformation dieses Objektes zusammen mit der Kennung "M" in die den Netzwerkmanagementzentren NMC1 und NMC2 zugeordneten Änderungslisten ein. Weiterhin generiert das Betriebs- und Wartungszentrum OMC1 eine Nachricht zur Information über die erfolgte Änderung, vorzugsweise eine standardisierte notifyAttributeValueChange-Notification, welche nur vom Netzwerkmanagementzentrum NMC2 ausgewertet wird, da das Netzwerkmanagementzentrum NMC1 keine konfigurationsbezogenen Notifications auswertet. Das Netzwerkmanagementzentrum NMC2 aktualisiert die eigene Datenbank-Information entsprechend der notifyAttributeValueChange-Notification. Der Agent kann jedoch nicht erkennen, ob ein Manager diese Notification tatsächlich auswertet oder nicht.

Zum Zeitpunkt t3 wird im Verfahrensschritt "MOCⱼ, MOIⱼ create" ein neues Objekt, identifiziert durch MOIⱼ der Objektklasse MOCⱼ, vom OMC-Operator erzeugt. Das Betriebs- und Wartungszentrums OMC1 trägt die Identifikationsinformation dieses Objektes zusammen mit der Kennung "N" in die den Netzwerkmanagementzentren NMC1 und NMC2 zugeordneten Änderungslisten ein. Weiterhin generiert das Betriebs- und Wartungszentrum OMC1 eine Nachricht zur Information über die erfolgte Erzeugung, vorzugsweise eine standardisierte notifyObjectCreation-Notification, welche nur vom Netzwerkmanagementzentrum NMC2 ausgewertet wird, d.h. das Netzwerkmanagementzentrum NMC2 aktualisiert die eigene Datenbank-Information entsprechend. Der Agent kann jedoch wieder nicht erkennen, ob ein Manager diese Notification tatsächlich auswertet oder nicht.

Zum Zeitpunkt t4 wird im Verfahrensschritt INTERRUPT die Kommunikation zwischen dem Netzwerkmanagementzentrum NMC2 und dem Betriebs- und Wartungszentrums OMC1 unterbrochen, z.B. durch vorläufigen Ausfall des Netzwerkmanagementzentrums NMC2.

Zum Zeitpunkt t5 wird im Verfahrensschritt "MOCₖ, MOIₖ delete" ein Objekt, identifiziert durch MOIₖ der Objektklasse MOCₖ, vom OMC-Operator gelöscht. Das Betriebs- und Wartungszentrum OMC1 trägt die Identifikationsinformation dieses Objektes zusammen mit der Kennung "D" in die den Netzwerkmanagementzentren NMC1 und NMC2 zugeordneten Änderungslisten ein. Weiterhin generiert das Betriebs- und Wartungszentrum OMC1 eine Nachricht zur Information über die erfolgte Löschung, vorzugsweise eine standardisierte notifyObjectDeletion-Notification, welche verloren geht, da die Kommunikation zwischen dem Netzwerkmanagementzentrum NMC2 und dem Betriebs- und Wartungszentrums OMC1 unterbrochen ist.

Der Zeitpunkt t6 entspricht einem Zeitpunkt des periodischen Informationsabgleichs zwischen dem Netzwerkmanagementzentrum NMC1 und dem Betriebs- und Wartungszentrum OMC1, so dass das Netzwerkmanagementzentrum NMC1 zur Aktualisierung seiner Konfigurationsdaten eine Anforderungsnachricht getConfigurationChanges Request an das Betriebs- und Wartungszentrum OMC1 sendet. Diese Anforderungsnachricht getConfigurationChanges Request fordert zur Synchronisation aller Konfigurationsdaten, die seit der letzten, von dem Netzwerkmanagementzentrum NMC1 ausgelösten Synchronisation zum Zeitpunkt t0 verändert wurden, auf. Das Betriebs- und Wartungszentrum OMC1 findet in der dem Netzwerkmanagementzentrum NMC1 zugeordneten Änderungsliste die Objektinstanzen MOIᵢ, MOIⱼ und MOIₖ, deren Änderungen in der darauf folgend von dem Betriebs- und Wartungszentrum OMC1 an das Netzwerkmanagementzentrum NMC1 gesendeten Antwortnachricht getConfigurationChanges Response z.B. folgendermaßen mitgeteilt werden:
- newObjectsList: < MOCⱼ , MOIⱼ , AttributListeⱼ >
- changedObjectsList: < MOCᵢ , MOIᵢ , AttributListeᵢ >
- deletedObjectsList: < MOCₖ , MOIₖ > .
   Der Agent löscht anschließend alle Einträge aus der Änderungsliste des Netzwerkmanagementzentrums NMC1.

Zum Zeitpunkt t7 werden im Verfahrensschritt "MOCₘ, MOIₘ change" eine oder mehrere Attribute eines Objektes, identifiziert durch MOIₘ der Objektklasse MOCₘ, verändert. Das Betriebs- und Wartungszentrum OMC1 trägt die Identifikationsinformation dieses Objektes zusammen mit der Kennung "M" in die den Netzwerkmanagementzentren NMC1 und NMC2 zugeordneten Änderungslisten ein und generiert eine notifyAttributeValueChange-Notification, die vom Netzwerkmanagementzentrum NMC1 ignoriert wird, während das Netzwerkmanagementzentrum NMC2 zu diesem Zeitpunkt immer noch nicht erreichbar ist.

Zum Zeitpunkt t8 werden im Verfahrensschritt "MOCᵢ, MOIi change" eine oder mehrere Attribute des Objektes, identifiziert durch MOIᵢ der Objektklasse MOCᵢ, erneut verändert. Das Betriebs- und Wartungszentrum OMC1 trägt die Identifikationsinformation dieses Objektes zusammen mit der Kennung "M" in die dem Netzwerkmanagementzentren NMC1 zugeordnete Änderungsliste ein. Das Betriebs- und Wartungszentrum OMC1 stellt fest, dass Identifikationsinformation dieses Objektes zusammen mit der Kennung "M" in der Änderungsliste des Netzwerkmanagementzentren NMC2 bereits vorhanden ist und demzufolge kein neuer Eintrag erforderlich ist. Auch die folgende notifyAttributeValueChange-Notification geht verloren, da die Kommunikation zwischen dem Netzwerkmanagementzentrum NMC2 und dem Betriebs- und Wartungszentrum OMC1 gestört ist.

Bei der mehrfachen Änderung bezüglich des selben Objektes zwischen zwei Synchronisationen in einer Änderungsliste wird folgendermaßen vorgegangen:
- Wenn ein Objekt zunächst verändert und dann gelöscht wird, steht die Identifikationsinformation dieses Objektes nur mit der Kennung "D" in der Änderungsliste.
- Wenn ein Objekt zunächst erzeugt und anschließend verändert wird, steht die Identifikationsinformation dieses Objektes weiterhin mit der Kennung "N" in der Änderungsliste, da das Objekt für den jeweiligen Manager neu ist.
- Wenn ein Objekt zunächst erzeugt und anschließend gelöscht wird, wird dieses Objekt aus der jeweiligen Änderungsliste entfernt, für den Manager hätte dieses Objekt bei der folgenden Synchronisation keine Bedeutung.
- Wenn das selbe Objekt zunächst gelöscht und anschließend erneut erzeugt wird, steht die Identifikationsinformation dieses Objektes mit der Kennung "M" in der Änderungsliste, da der Manager dieses Objekt bereits kennt aber gegebenenfalls durch die neue Erzeugung Attributwerte geändert wurden.

Zum Zeitpunkt t9 ist die Kommunikation zwischen dem Netzwerkmanagementzentrum NMC2 und dem Betriebs- und Wartungszentrum OMC1 wiederhergestellt. Das Netzwerkmanagementzentrum NMC2 sendet daraufhin eine Anforderung getConfigurationChanges Request an den Agenten zur Synchronisation derjenigen Konfigurationsdaten, die seit der letzten Synchronisation zum Zeitpunkt t1 verändert wurden. Der Agent findet in der dem Netzwerkmanagementzentrum NMC2 zugeordneten Änderungsliste die betreffenden Objekte und sendet eine Nachricht getConfigurationChanges Response an das Netzwerkmanagementzentrum NMC2 mit folgendem Inhalt:
- newObjectsList: < MOCⱼ , MOIⱼ , AttributListeⱼ >
- changedObjectsList:
   < MOCᵢ , MOIᵢ , AttributListeᵢ >; dies enthält nur die letzte Änderung zum Zeitpunkt t8, nicht die Änderung zum Zeitpunkt t2;
   < MOCₘ , MOIₘ , AttributListeₘ >
- deletedObjectsList: < MOCₖ , MOIₖ >.

Das Betriebs- und Wartungszentrum OMC1 löscht anschließend alle Einträge aus der Änderungsliste des Netzwerkmanagementzentrum NMC2.

Obwohl das Netzwerkmanagementzentrum NMC2 die Notifications zum Zeitpunkt t2 (notifyAttributeValueChange) und zum Zeitpunkt t3 (notifyObjectCreation) erhalten und ausgewertet hat, sind auch diese Änderungen in der Nachricht getConfigurationChanges Response enthalten. Dies ist vorteilhaft, da diese, in den 3GPP-Standards als optional definierten Notifications (notifyAttributeValueChange und notifyObjectCreation) von manchen Agenten oder Managern nicht unterstützt werden. Somit ist das hier beschriebene Verfahren unabhängig von den Implementierungen im Agenten oder Manager. Weiterhin ist dem Agenten nicht bekannt, ob eine von ihm generierte konfigurationsbezogene Notification von einem Manager tatsächlich ausgewertet wird.

Zum Zeitpunkt t10 startet das Netzwerkmanagementzentrum NMC1 erneut seine periodische Datenaktualisierung mit Hilfe einer Delta-Synchronisation für die seit dem Zeitpunkt t6 geänderten Konfigurationsdaten durch Versendung einer Nachricht getConfigurationChanges Request. Die Antwort getConfigurationChanges Response des Betriebs- und Wartungszentrums OMC1 enthält folgende Informationen:
- changedObjectsList:
   < MOCᵢ , MOIᵢ , AttributListeᵢ >
   < MOCₘ , MOIₘ , AttributListeₘ > .
   Die anderen Teile der Agentenantwort, d.h. newObjectsList und deletedObjectsList, entfallen oder sind leer. Das Betriebs- und Wartungszentrum OMC1 löscht anschließend alle Einträge aus der Änderungsliste des Netzwerkmanagementzentrum NMC1.

Das Verfahren kann auch für die Delta-Synchronisation eines vollständigen Objektbaums (MIT = Management Information Tree, d.h. die Gesamtheit aller Objekte) oder nur eines Teils eines Objektbaums eingesetzt werden. In dem 3GPP-Standard TS 32.602 [Configuration Management (CM); Basic CM Integration Reference Point (IRP): Information Service (IS), V6.0.01 existiert die Operation getContainment_, welche eine vollständige Synchronisation des Objektbaums bewirkt. Gemäß der Erfindung wird zur Delta-Synchronisation des Objektbaums eine Operation getContainmentChanges, umfassend eine Anforderungsnachricht getContainmentChanges Request des Managers und eine Antwortnachricht getContainmentChanges Response des Agenten, eingesetzt. Durch das Verfahren zur Delta-Synchronisation des Objektbaums empfängt der Manager eine Liste der neuen / geänderten / gelöschten Objekte ohne deren Attribute, d.h. die Antwortnachricht getContainmentChanges Response des Agenten umfasst nur die Identifikationsinformation der jeweiligen Objekte und ihre Objektklasse.

Das beschriebene Verfahren ist unabhängig vom Telekommunikationssystem, es kann z.B. eingesetzt werden in einem Mobilfunkkommunikationssytem, im Festnetz und anderen Systemen. Weiterhin ist das Verfahren unabhängig von dem Kommunikationsprotokoll zwischen Manager und Agent, so sind z.B. CMIP, CORBA, oder andere Protokolle einsetzbar, und von der Art der Management-Schnittstelle, es kann z.B. auf eine EM-NE, NM-EM, oder andere Schnittstellen angewendet werden.

Das Verfahren kann für eine schnelle Synchronisation von Konfigurationsdaten eingesetzt werden, da durch die Beschränkung auf die Übertragung von Änderungen seit der letzten Synchronisation auf die Übertragung von dem Manager bekannten und somit redundanten Informationen verzichtet wird. Bezug nehmend auf die übliche Menge von Konfigurationsänderungen im Vergleich zur Gesamtmenge der Konfigurationsdaten, welche mit den bisherigen standardisierten Prozeduren nur als Ganzes synchronisiert werden können, bietet das beschrieben Verfahren eine bedeutende Reduzierung der Synchronisationsdauer, in großen Netzen beispielsweise mindestens um den Faktor 10 kürzer. Von Vorteil ist das Verfahren insbesondere dann, wenn der Agent und/oder der Manager keine konfigurationsbezogenen Notifications unterstützen. In einem solchen Fall kann die Delta-Synchronisation periodisch und nicht nur nach Wiederherstellung der Manager-Agent Kommunikation gestartet werden, um sicherzustellen, dass ein Manager seine Information schnell und effizient auf den aktuellen Stand bringen kann.

Das bislang beschriebene Verfahren zur Delta-Synchronisation von Konfigurationsdaten kann auch für die Synchronisation von Alarmen verwendet werden. In diesem Fall enthält die Antwortnachricht getAlarmChanges Response des Agenten auf eine Aufforderungsnachricht getAlarmChanges Request des Managers zur Delta-Synchronisation von Alarmen hin folgende Informationen:
- newObjectsList: alle für den Manager relevanten neuen Alarme, d.h. Alarme, welche bei dem Agenten eingegangen sind bzw. von ihm generiert wurden, seit der letzten Synchronisation;
- changedObjectsList: alle für den Manager relevanten Alarme, deren Zustand sich seit der letzten Synchronisation geändert hat, z.B. ein aktiver Alarm wurde in den Zustand "cleared" gesetzt aber von Operator noch nicht bestätigt, oder er wurde bestätigt aber noch nicht "cleared";
- deletedObjectsList: alle für den Manager relevanten Alarme, die seit der letzten Synchronisation gelöscht wurden, z.B. weil in der Zwischenzeit der Zustand "cleared und bestätigt" erreicht wurde.

Auch eine Delta-Synchronisation von Konfigurationsdaten und Alarmen kann durchgeführt werden.

## Patentansprüche

1. Verfahren zum Betreiben eines einen Manager (NMC1, NMC2) und einen Agenten (OMC1) umfassenden Managementnetzes eines Telekommunikationsnetzes,
bei dem der Manager (NMC1, NMC2) und der Agent (OMC1) unter Verwendung eines Objektmodells miteinander kommunizieren, gemäß welchem Objekte (MOIᵢ, MOIⱼ, MOIₖ, MOIₘ) Objektklassen (MOCᵢ, MOCⱼ, MOCₖ, MOCₘ) zugeordnet sind, und bei dem der Manager (NMC1, NMC2) an den Agenten (OMC1) eine Anfrage (getConfigurationChanges Request) nach einem Informationsabgleich sendet,
**dadurch gekennzeichnet,**
**dass** der Manager (NMC1, NMC2) auf die Anfrage (getConfigurationChanges Request) hin Informationen von dem Agenten (OMC1) empfängt ausschließlich über Objekte (MOIᵢ, MOIⱼ, MOIₖ, MOIₘ) und/oder Alarme, bezüglich derer seit einem bestimmten Zeitpunkt (t0, t1, t6) eine Änderung erfolgte.

2. Verfahren zum Betreiben eines einen Manager (NMC1, NMC2) und einen Agenten (OMC1) umfassenden Managementnetzes eines Telekommunikationsnetzes,
bei dem der Manager (NMC1, NMC2) und der Agent (OMC1) unter Verwendung eines Objektmodells miteinander kommunizieren, gemäß welchem Objekte (MOIᵢ, MOIⱼ, MOIₖ, MOIₘ) Objektklassen (MOCᵢ, MOCⱼ, MOCₖ, MOCₘ) zugeordnet sind, und bei dem der Manager (NMC1, NMC2) an den Agenten (OMC1) eine Anfrage (getConfigurationChanges Request) nach einem Informationsabgleich sendet,
**dadurch gekennzeichnet,**
**dass** der Agent (OMC1) auf die Anfrage (getConfigurationChanges Request) hin Informationen an den Manager (NMC1, NMC2) sendet ausschließlich über Objekte (MOIᵢ, MOIⱼ, MOIₖ, MOIₘ) und/oder Alarme, bezüglich derer seit einem bestimmten Zeitpunkt (t0, t1, t6) eine Änderung erfolgte.

3. Verfahren zum Betreiben eines einen Manager (NMC1, NMC2) und einen Agenten (OMC1) umfassenden Managementnetzes eines Telekommunikationsnetzes,
bei dem der Manager (NMC1, NMC2) und der Agent (OMC1) unter Verwendung eines Objektmodells miteinander kommunizieren, gemäß welchem Objekte (MOIᵢ, MOIⱼ, MOIₖ, MOIₘ) Objektklassen (MOCᵢ, MOCⱼ, MOCₖ, MOCₘ) zugeordnet sind, und bei dem der Agent (OMC1) von dem Manager (NMCl, NMC2) eine Anfrage (getConfigurationChanges Request) nach einem Informationsabgleich empfängt,
**dadurch gekennzeichnet,**
**dass** der Agent (OMC1) auf die Anfrage (getConfigurationChanges Request) hin Informationen an den Manager (NMC1, NMC2) sendet ausschließlich über Objekte (MOIi, MOIj, MOIₖ, MOIₘ) und/oder Alarme, bezüglich derer seit einem bestimmten Zeitpunkt (t0, t1, t6) eine Änderung erfolgte.

4. Verfahren nach einem der Ansprüche 1 bis 3,
**dadurch gekennzeichnet,**
**dass** es sich bei dem bestimmten Zeitpunkt (t0, t1, t6) um den Zeitpunkt des letzten von dem Manager (NMC1, NMC2) angeforderten Informationsabgleichs (getMoAttributes Request, getMoAttributes Response; getConfigurationChanges Request, getConfigurationChanges Response) zwischen dem Manager (NMC1, NMC2) und dem Agent (OMC1) handelt.

5. Verfahren nach einem der Ansprüche 1 bis 4,
**dadurch gekennzeichnet,**
**dass** die Anfrage (getConfigurationChanges Request) des Managers (NMC1, NMC2) Informationen über Objekte (MOIi, MOIⱼ, MOIₖ, MOIₘ) enthält, auf welche sich die Informationen des Agenten (OMC1) über Objekte (MOIi, MOIⱼ, MOIₖ, MOIₘ) und/oder Alarme, bezüglich derer seit dem bestimmten Zeitpunkt (t0, t1, t6) eine Änderung erfolgte, beziehen sollen.

6. Verfahren nach einem der Ansprüche 1 bis 5,
**dadurch gekennzeichnet,**
**dass** die Informationen über Objekte (MOIᵢ, MOIⱼ, MOIₖ, MOIₘ), bezüglich derer seit dem bestimmten Zeitpunkt (t0, t1, t6) eine Änderung erfolgte, umfassen: Informationen über eine seit dem bestimmten Zeitpunkt (t0, t1, t6) erfolgte Änderung hinsichtlich mindestens eines Attributes von mindestens einem dem Manager (NMC1, NMC2) bekannten Objekt (MOIi, MOIₘ).

7. Verfahren nach einem der Ansprüche 1 bis 6,
**dadurch gekennzeichnet,**
**dass** die Informationen über Objekte (MOIᵢ, MOIⱼ, MOIₖ, MOIₘ), bezüglich derer seit dem bestimmten Zeitpunkt (t0, t1, t6) eine Änderung erfolgte, umfassen: Informationen über zumindest ein dem Manager (NMC1, NMC2) unbekanntes Objekt (MOIⱼ), welches nach dem bestimmten Zeitpunkt (t0, t1, t6) für den Manager (NMC1, NMC2) relevant geworden ist.

8. Verfahren nach einem der Ansprüche 1 bis 7,
**dadurch gekennzeichnet,**
**dass** die Informationen über Objekte (MOIᵢ, MOIⱼ, MOIₖ, MOIₘ), bezüglich derer seit dem bestimmten Zeitpunkt (t0, t1, t6) eine Änderung erfolgte, umfassen: Informationen über zumindest ein dem Manager (NMC1, NMC2) bekanntes Objekt (MOIₖ), welches nach dem bestimmten Zeitpunkt (t0, t1, t6) für den Manager (NMC1, NMC2) irrelevant geworden ist.

9. Verfahren nach einem der Ansprüche 1 bis 8,
**dadurch gekennzeichnet,**
**dass** die Informationen über Alarme, bezüglich derer seit
dem bestimmten Zeitpunkt (t0, t1, t6) eine Änderung erfolgte, umfassen: Informationen über zumindest einen nach dem bestimmten Zeitpunkt (t0, t1, t6) von dem Agenten (OMC1) empfangenen und/oder generierten Alarm.

10. Verfahren nach einem der Ansprüche 1 bis 9,
**dadurch gekennzeichnet,**
**dass** die Informationen über Alarme, bezüglich derer seit dem bestimmten Zeitpunkt (t0, t1, t6) eine Änderung erfolgte, umfassen: Informationen über eine seit dem bestimmten Zeitpunkt (t0, t1, t6) erfolgte Änderung hinsichtlich mindestens eines Zustandes von mindestens einem Alarm.

11. Verfahren nach einem der Ansprüche 1 bis 10,
**dadurch gekennzeichnet,**
**dass** die Anfrage (getConfigurationChanges Request) durch den Manager (NMC1, NMC2) periodisch und/oder nach einer Wiederherstellung (RE-ESTABLISH) der Kommunikation zwischen dem Manager (NMC1, NMC2) und dem Agent (OMC1) gesendet wird.

12. Manager (NMC1, NMC2) für ein den Manager (NMC1, NMC2) und einen Agenten (OMC1) umfassendes Managementnetz eines Telekommunikationsnetzes, mit
Mitteln zum Kommunizieren mit dem Agenten (OMC1) unter Verwendung eines Objektmodells, gemäß welchem Objekte (MOIi, MOIⱼ, MOIₖ, MOIₘ) Objektklassen (MOCi, MOCⱼ, MOCₖ, MOCₘ) zugeordnet sind,
Mitteln zum Senden einer Anfrage (getConfigurationChanges Request) nach einem Informationsabgleich an den Agenten (OMC1),
**gekennzeichnet durch**
Mittel zum Empfangen auf die Anfrage (getConfigurationChanges Request) hin von Informationen von dem Agenten (OMC1) ausschließlich über Objekte (MOIᵢ, MOIⱼ, MOIₖ, MOIₘ) und/oder Alarme, bezüglich derer seit einem bestimmten Zeitpunkt (t0, t1, t6) eine Änderung erfolgte.

13. Agent (OMC1) für ein einen Manager (NMC1, NMC2) und den Agenten (OMC1) umfassendes Managementnetz eines Telekommunikationsnetzes, mit
Mitteln zum Kommunizieren mit dem Manager (NMC1, NMC2) unter Verwendung eines Objektmodells, gemäß welchem Objekte (MOIᵢ, MOIⱼ, MOIₖ, MOIₘ) Objektklassen (MOCᵢ, MOCⱼ, MOCₖ, MOCₘ) zugeordnet sind,
Mitteln zum Empfangen einer Anfrage (getConfigurationChanges Request) nach einem Informationsabgleich von dem Manager (NMC1, NMC2),
**gekennzeichnet durch**
Mittel zum Versenden auf die Anfrage (getConfigurationChanges Request) hin von Informationen an den Manager (NMC1, NMC2) ausschließlich über Objekte (MOIᵢ, MOIⱼ, MOIₖ, MOIₘ) und/oder Alarme, bezüglich derer seit einem bestimmten Zeitpunkt (t0, t1, t6) eine Änderung erfolgte.

14. Managementnetz eines Telekommunikationsnetzes, umfassend
einen Manager (NMC1, NMC2) und einen Agenten (OMC1) nach den vorangehenden Ansprüchen.
